# EUROPEAN PATENT APPLICATION

(11) **EP 1 939 021 A1**
(43) Date of publication of application: **02.07.2008**
(21) Application number: 07380388.4
(22) Date of filing: 27.12.2007
(51) Int. Cl.: B60H 1/00

(54) **Air distribution duct for automotive vehicles**

(30) Priority: 28.12.2006 ES 200602796 U
(71) Applicant: Seat, S.A., 08760 Martorell, Barcelona (ES)
(72) Inventor: Martos Ortega, Antonio c/o Seat, S.A., 08760 Martorell (Barcelona) (ES); Guardia Munuera, Pedro c/o Seat, S.A., 08760 Martorell (Barcelona) (ES); Rosello Roig, Nuria c/o Seat, S.A., 08760 Martorell (Barcelona) (ES)
(74) Representative: Carvajal y Urquijo, Isabel

(57) **Abstract**

The invention relates to an air distribution duct for automotive vehicles formed by a one-piece body (1) provided with six deformable and corrugated sections (8) and rigid intermediate sections with anchoring tabs (5) and central openings (3) and end openings (10) for connecting them to central and lateral diffusers of the vehicle.

## Description

### Object of the Invention

The present invention relates to an air distribution duct for automotive vehicles provided in order to form part of the ventilation system of the vehicle and intended to be coupled on the corresponding lateral and central diffusers of the dashboard of the vehicle.

The object of the invention is to be able to supply air both to the central diffusers and to the lateral diffusers by means of a single duct regardless of the side (right or left) on which the corresponding steering of the automotive vehicle is located.

### Background of the Invention

Currently in the ventilation system of automotive vehicles, the conduction of air to the diffusers of the dashboard is carried out by means of two unequal and independent ducts, since if the steering of the vehicle is located on the left or if it is located on the right has an effect, the duct in each case adapting either configuration.

In other words it is necessary to manufacture two types of parts (ducts), which implies a considerable economic expense given that two manufacturing processes are carried out as well as needing to use to different molds in order to obtain the two types of ducts.

Likewise, the time used in manufacturing both types of ducts will be greater, and it is necessary to add to this the problem and drawbacks arising at the time of storing and distributing the ducts in two groups, thereby involving an increase in marketing and manufacturing costs, which obviously has an effect on the increased price of the final product, i.e. of the automotive vehicle since it is further necessary to assemble two independent ducts in each vehicle, etc.

The anchoring of the ducts is normally carried out by means of snap-on washers.

### Description of the Invention

The air distribution duct which is proposed has been conceived to solve all problems set forth above based on a simple but efficient solution.

More specifically, as a first novel feature the duct of the invention is formed as a one-piece body, being valid for supplying air both to the central diffusers as well as to the lateral diffusers of the dashboard of the vehicle.

Furthermore said one-piece body forming the duct is symmetrical to precisely allow the simultaneous supply of air to the lateral and central diffusers.

Another novel feature of the duct of the invention consists of the fact that six short sections thereof, three on each side of the central part of the duct, are corrugated to provide said duct with a flexible or deformable character through said sections with three degrees of freedom, which allows a small movement of the duct in any direction, being enough to fit and to be able to perfectly couple the outlets of the duct on the outlet diffusers of the vehicle itself.

The general configuration of the duct can be considered as that of a yoke, with a rigid central section in which the outlets for central diffusers are located, two divergent sections that are also rigid with flanges provided with double openings in order to be anchored in vehicles with right-hand steering and left-hand steering, two other lateral sections with a rigid central part and also with anchoring tabs, as well as two end sections or parts in each lateral section of those referred to, and the two parts or ends of which are corrugated in order to provide a deformable character to the duct in these areas, being finished on the other two end sections and bent at an obtuse angle, which also have a central corrugated part, as in the previous case, and through the sections of which the coupling is carried out on the corresponding diffusers of the vehicle.

According to the mentioned solution the same air distribution duct is used for automotive vehicles with right-hand steering or left-hand steering, which implies a considerable cost reduction and a reduction in manufacturing and assembly time by standardizing the duct and its application.

Productivity is also improved given that the manufacturing process can be standardized, going from two processes as traditionally occurs to a single process by virtue of the fact that the two ducts conventionally used are formed in a single symmetrical duct and can be applied to vehicles both with right-hand steering and left-hand steering.

Since the duct incorporates corrugated sections allowing slight deformations, small dispersions can be absorbed and therefore optimum coupling and easy adaptation can be achieved, as well as a reduction in the assembly time.

Finally it can be said that the production time for the duct as a single part is reduced since the quality control and verification process is less exhaustive as a consequence of having a higher tolerance range, precisely by virtue of the deformations that the duct can experience in its assembly.

### Description of the Drawings

To complement the description being made and for the purpose of aiding to better understand the features of the invention according to a preferred practical embodiment thereof, a set of drawings is attached as an integral part of said description, in which the following has been shown with an illustrative and non-limiting character:

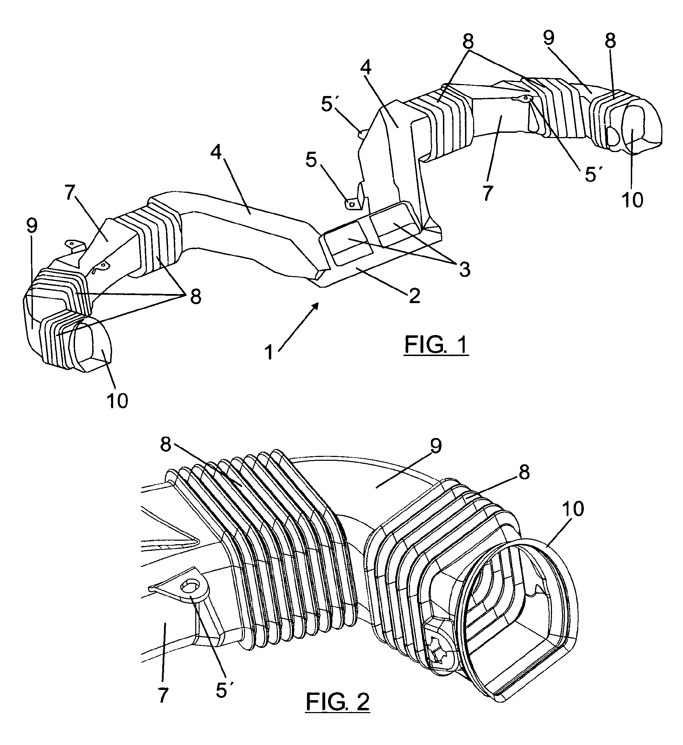

Figure 1 shows a representation according to a general perspective view of the duct carried out according to the object of the invention.
Figure 2 shows an enlarged detail of the right end corresponding to the duct shown in the previous figure to allow clearly seeing the features of the corrugated sections and the opening for coupling the duct to the corresponding diffusers of the automobile.
Figure 3 shows a schematic plan view of part of the duct in which the corresponding anchoring tabs or flanges can be seen.
Figure 4 shows a plan view of the duct of the invention showing the symmetry thereof.

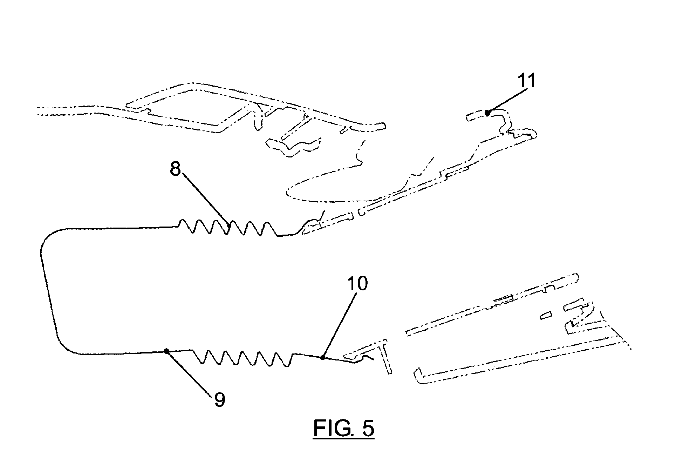

Figure 5 finally shows the way of coupling the duct to one of the lateral diffusers provided in the corresponding automotive vehicle.

### Preferred Embodiment of the Invention

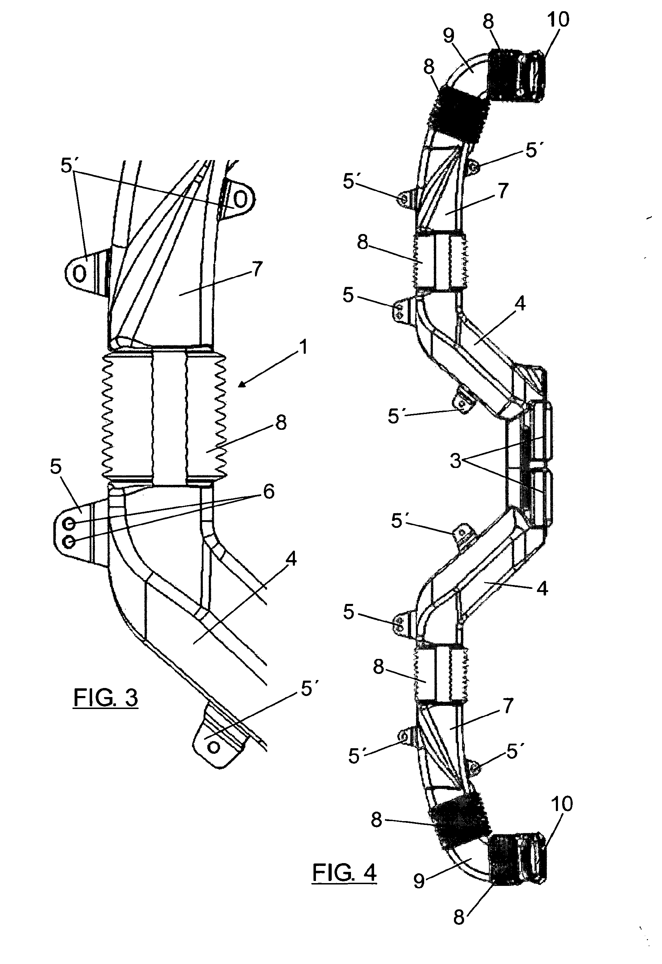

As can be seen in the mentioned figures, the duct (1) of the invention is formed as a one-piece body and has an elongated and symmetrical configuration with a central section (2) which is rigid and is provided with the corresponding outlets (3) for its coupling to the central diffusers of the dashboard of a vehicle. This central section (2) is rigid and extends at its ends into respective divergent sections (4) which are also rigid and provided with tabs or flanges (5) with a double opening (6), as shown in Figure 3, for anchoring the duct in vehicles both right-hand steering and left-hand steering.

These divergent rigid sections (4) extend into two lateral sections (7) with an initial part and an end part thereof determined by small corrugated sections (8) such that the intermediate part (7) of these lateral sections is rigid, whereas the corrugated sections (8) make the deformability of the duct possible in these areas for adapting it in its assembly on the vehicle, collaborating in the duct other likewise corrugated sections provided in a bent end section (9) into which the outermost corrugated sections of the lateral sections (7) extend, these corrugated sections of the bends (9) being finished in openings (10) for coupling to the corresponding lateral diffusers (11) of the dashboard of the vehicle.

The mentioned rigid sections (4) and (7) include, in addition to the tabs or flanges (5) with their double openings(6), other flanges (5'), provided with an opening to collaborate in anchoring the duct on the vehicle.

## Claims

1. An air distribution duct for automotive vehicles provided for its coupling to the central and lateral diffusers of the dashboard of an automotive vehicle, forming part of the corresponding ventilation system, **characterized in that** it is formed by a one-piece body (1) provided with six deformable corrugated sections (8), making a small movement of part of the duct possible for its adaptability in the coupling on the central and lateral diffusers of the vehicle in question; anchoring means having been provided indistinctly making its assembly possible in vehicles with right-hand steering and in vehicles with left-hand steering.

2. An air distribution duct for automotive vehicles according to claim 1, **characterized in that** the one-piece body has an elongated configuration like a yoke with a rigid central section (2) in which the outlets (3) for coupling to the central diffusers of the vehicle are provided, followed by two divergent sections (4) with tabs (5) having double openings (8) to allow assembly in vehicles with right-hand steering and with left-hand steering, the divergent sections of which continue into respective straight lateral sections (7), each of which has corrugated end parts (8), said straight lateral sections continuing into respective bends (9) with their corrugated end part (8) and its opening (10) for coupling to the lateral diffusers of the vehicle.
